(19) Europäisches Patentamt
European Patent Office
Office européen des brevets

(11) EP 2 664 759 B1

(12) **EUROPEAN PATENT SPECIFICATION**

(45) Date of publication and mention
of the grant of the patent:
**19.04.2017 Bulletin 2017/16**

(51) Int Cl.:
*F01N 3/20* $^{(2006.01)}$   *F01N 9/00* $^{(2006.01)}$
*F01N 11/00* $^{(2006.01)}$

(21) Application number: **13166431.0**

(22) Date of filing: **03.05.2013**

(54) **Exhaust emission control apparatus and exhaust emission control method for internal combustion engine**

Abgasemissionssteuervorrichtung und -verfahren für Verbrennungsmotor

Appareil et procédé de commande d'émission de gaz d'échappement pour moteur à combustion interne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2012 JP 2012113405**

(43) Date of publication of application:
**20.11.2013 Bulletin 2013/47**

(73) Proprietor: **TOYOTA JIDOSHA KABUSHIKI KAISHA**
**Toyota-shi, Aichi-ken, 471-8571 (JP)**

(72) Inventor: **Aoyagi, Yusuke**
**Toyota-shi, Aichi-ken, 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(56) References cited:
**EP-A1- 1 426 575     EP-A1- 1 767 754**
**EP-A1- 1 811 144     JP-A- 2009 257 190**

**Description**

BACKGROUND OF THE INVENTION

1. Field of the Invention

The invention relates to an exhaust emission control apparatus and an exhaust emission control method for an internal combustion engine.

2. Description of Related Art

As an exhaust emission control apparatus for an internal combustion engine such as a diesel engine or the like that is often operated in such a manner as to make the air-fuel ratio lean, a control apparatus that is equipped with a urea selective reduction catalyst has been known. In this exhaust emission control apparatus, an ammonic reducing agent such as an aqueous solution of urea or the like is added to the selective reduction catalyst through an addition valve, and nitrogen oxides (NOx) in exhaust gas are reduced and purified by the reducing agent. In such an exhaust emission control apparatus, when the purification capacity has fallen due to a damage caused to the selective reduction catalyst, it is desirable to swiftly detect this fall in the purification capacity.

Thus, in an exhaust emission control apparatus described in Japanese Patent Application Publication No. 2004-176719 (JP-2004-176719 A), a concentration of NOx discharged from a selective reduction catalyst is monitored. Then, when the concentration of NOx does not change despite a change in the addition amount of a reducing agent, it is determined that an abnormality has occurred in the exhaust emission control apparatus. It is then notified that the abnormality has occurred in the exhaust emission control apparatus.

In an exhaust emission control apparatus that is equipped with a urea selective reduction catalyst, an aqueous solution of urea or the like, which is used as a reducing agent, degenerates due to the heat of exhaust gas or the like. Thus, in the exhaust emission control apparatus that is equipped with the urea selective reduction catalyst, deposits originating in urea may be generated. When deposits are accumulated, for example, in the vicinity of an addition valve or the like, the reducing agent cannot be injected from the addition valve by the amount or atomization mode matching their requirements. Thus, as in the case where the selective reduction catalyst does not function normally, the purification capacity of the exhaust emission control apparatus falls. However, a case in which deposits are accumulated is different from a case where the addition capacity of the addition valve has fallen or a case where the selective reduction catalyst is damaged. That is, the accumulation of deposits can be resolved by carrying out post injection or the like to raise the temperature of exhaust gas and then burn out the deposits.

However, in the exhaust emission control apparatus described in Japanese Patent Application Publication No. 2004-176719 (JP-2004-176719 A), even if the purification capacity has fallen as a result of the accumulation of deposits, it is notified that an abnormality has occurred in the exhaust emission control apparatus. That is, even in the case where a fall in the purification capacity can be resolved through a process of burning out deposits, it is notified that an abnormality has occurred in the exhaust emission control apparatus.

EP 1 426 575 A1 discloses an exhaust emission control apparatus, for an internal combustion engine, comprising a urea selective reduction catalyst that is provided in an exhaust passage of the internal combustion engine and an addition valve that adds a reducing agent to the selective reduction catalyst, wherein the exhaust emission control apparatus is adapted to detect a NOx purification capacity of the selective reduction catalyst, and is adapted to notify that a function of purification is abnormal when the detected NOx purification capacity has not reached a predetermined capacity.

EP 1 426 575 A1 additionally discloses a control method for said apparatus, comprising: adding a reducing agent to the urea selective reduction catalyst; detecting a NOx purification capacity of the selective reduction catalyst; and notifying that a function of purification is abnormal when the detected NOx purification capacity has not reached a predetermined capacity.

JP 2009 257190 discloses an exhaust emission control device capable of satisfactorily inhibiting accumulation of urea-derived deposits in an exhaust gas passage, and preventing ammonia slip accompanying elimination of urea-derived deposits.

SUMMARY OF THE INVENTION

The invention provides an exhaust emission control apparatus according to claim 1 and an exhaust emission control method according to claim 4, for an internal combustion engine that can notify that an abnormality has occurred only when the abnormality cannot be resolved through a process of burning out deposits. Advantageous further developments are subject-matter of the dependent claims. The abnormality that cannot be resolved through the process of burning out deposits refers to a case where the addition capacity of an addition valve has fallen, a case where a selective reduction catalyst is damaged, or the like.

In an exhaust emission control apparatus for an internal combustion engine according to a first aspect of the invention, a reducing agent is added to a urea selective reduction catalyst, which is provided in an exhaust passage of the internal combustion engine, from an addition valve. Then, the exhaust emission control apparatus detects a NOx purification capacity of the selective reduction catalyst when a burnout process of burning out deposits is completed, and notifies that a function of purification is abnormal when the detected NOx purification capacity has not reached a predetermined capacity.

When the NOx purification capacity of the selective reduction catalyst has fallen due to the accumulation of deposits, the process of burning out deposits is performed to burn out the accumulated deposits. Thus, the NOx purification capacity of the selective reduction catalyst rises. On the other hand, in the case where the addition capacity of the addition valve has fallen or the selective reduction catalyst is damaged, even if the process of burning out deposits is performed, the NOx purification capacity of the selective reduction catalyst does not rise, or rises only extremely slightly.

Accordingly, when the NOx purification capacity of the selective reduction catalyst that is detected when the process of burning out deposits is completed has not reached the predetermined capacity, it is notified that the function of purification is abnormal. Thus, only if an abnormality that cannot be resolved through the process of burning out deposits has occurred, it can be notified that the purification function of the exhaust emission control apparatus is abnormal. The abnormality that cannot be resolved through the process of burning out deposits refers to a case where the addition capacity of the addition valve has fallen, a case where the selective reduction catalyst is damaged, or the like.

The NOx purification capacity of the selective reduction catalyst can be obtained on the basis of, for example, the NOx purification rate of the selective reduction catalyst, the concentration of NOx in exhaust gas discharged from the selective reduction catalyst, the difference between the concentration of NOx in exhaust gas flowing into the selective reduction catalyst and the concentration of NOx in discharged exhaust gas (the concentration of NOx flowing in - the concentration of discharged NOx), the amount of NOx discharged from the selective reduction catalyst per unit time, the difference between the amount of NOx flowing into the selective reduction catalyst per unit time and the amount of NOx discharged per unit time (the amount of NOx flowing in - the amount of discharged NOx), or the like.

In an engine operation state in which the discharge amount of NOx is extremely large, even in the case where the accumulated deposits can be burned out by performing the process of burning out deposits, the NOx purification capacity of the selective reduction catalyst may not rise to the predetermined capacity.

Besides, In the exhaust emission control apparatus for the internal combustion engine according to the first aspect of the invention, it may be notified that the function of purification is abnormal when the NOx purification capacity is divergent from a target value.

It can be properly notified that the function of purification is abnormal, in accordance with the engine operation state. The target value of the NOx purification capacity is variably set on the basis of the engine operation state.

Meanwhile, the amount of deposits that can be burned out by performing the process of burning out deposits once is limited. Therefore, under a situation where deposits are accumulated in an amount that exceeds the burnout capacity of the burnout process, even if the burnout process is performed, the NOx purification capacity of the selective reduction catalyst may not rise to the predetermined capacity.

However, even in such a case, when the NOx purification capacity has fallen as a result of a case in which deposits are accumulated, the NOx purification capacity of the selective reduction catalyst rises through the performance of the process of burning out deposits. Accordingly, in this case, the degree of divergence between the NOx purification capacity of the selective reduction catalyst that is detected prior to the start of the burnout process and the NOx purification capacity that is detected when the burnout process is completed is large.

On the other hand, in the case where the addition capacity of the addition valve has fallen or the selective reduction catalyst is damaged, even if the process of burning out deposits is performed, the NOx purification capacity of the selective reduction catalyst does not rise or rises only extremely slightly. Accordingly, in this case, the degree of divergence between the NOx purification capacity of the selective reduction catalyst that is detected prior to the start of the burnout process and the NOx purification capacity that is detected when the burnout process is completed is small.

Besides, in the exhaust emission control apparatus for the internal combustion engine according to the first aspect of the invention, it may be notified that the function of purification is abnormal when the detected NOx purification capacity has not reached the predetermined capacity and a degree of divergence between a NOx purification capacity prior to the burnout of deposits through this burnout process and the NOx purification capacity that is detected when the burnout process is completed is smaller than a predetermined value.

This configuration can distinguish a case where a sufficient amount of deposits cannot be burned out through the process of burning out deposits from a case where an abnormality that cannot be resolved through the process of burning out deposits has occurred, and notify that the abnormality has occurred, only in the case where the abnormality that cannot be resolved through the process of burning out deposits has occurred..

On the other hand, when the degree of divergence between the NOx purification capacity prior to the burnout of deposits through the burnout process and the NOx purification capacity that is detected when the burnout process is completed is equal to or larger than a predetermined value, the accumulation amount of deposits is extremely large as described above. Therefore, it is highly likely that the burnout of a sufficient amount of deposits by performing the process of burning out deposits once be impossible.

Besides, in the exhaust emission control apparatus for the internal combustion engine according to the first aspect of the invention, the process of burning out deposits is performed again when the aforementioned degree of divergence is equal to or larger than the predetermined value.

According to this configuration, the accumulated deposits can still be burned out even after the last burnout process is completed, and the NOx purification capacity of the selective reduction catalyst can be swiftly raised.

Incidentally, the NOx purification capacity of the selective reduction catalyst prior to the burnout of deposits through the burnout process may be obtained prior to the start of the burnout process. Besides, when the NOx purification capacity of the selective reduction catalyst in initial stages of the start of the burnout process gently changes, the NOx purification capacity prior to the burnout of deposits through the burnout process may be obtained simultaneously with or immediately after the start of the burnout process.

Besides, a control method for an exhaust emission control apparatus having a urea selective reduction catalyst provided in an exhaust passage of the internal combustion engine and an addition valve that adds a reducing agent to the selective reduction catalyst according to the second aspect of the invention. In the method, a NOx purification capacity of the selective reduction catalyst is detected when a burnout process of burning out deposits is completed, and it is notified that a function of purification is abnormal if the detected NOx purification capacity has not reached a predetermined capacity.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a cross-sectional view of an exhaust emission control apparatus according to the first embodiment of the invention;

FIG. 2 is a flowchart showing a process procedure in notifying that the function of purification is abnormal;

FIG. 3 is a flowchart showing a process procedure in notifying that the function of purification is abnormal in the second embodiment of the invention;

FIG. 4 is a cross-sectional view of an exhaust emission control apparatus according to the third embodiment of the invention;

FIG. 5 is a flowchart showing a process procedure in notifying that the function of purification is abnormal in the third embodiment of the invention; and

FIG. 6 is a flowchart showing a process procedure in notifying that the function of purification is abnormal in the fourth embodiment of the invention.

DETAILED DESCRIPTION OF EMBODIMENTS

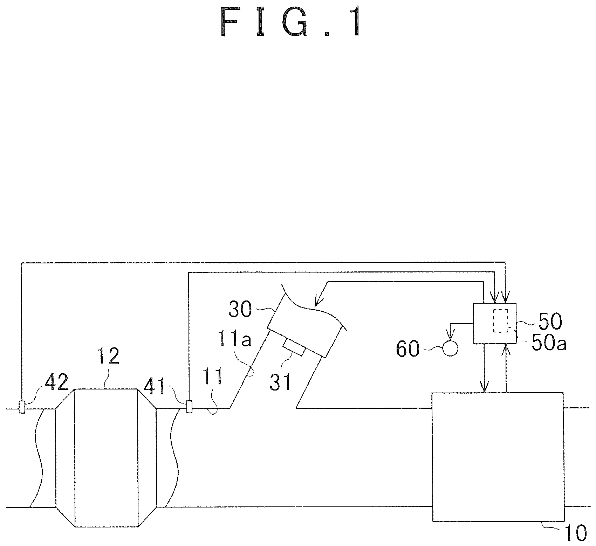

The first embodiment as a concrete form of an exhaust emission control apparatus for a diesel engine according to the invention will be described hereinafter with reference to FIGS. 1 to 3.

As shown in FIG. 1, a urea selective reduction catalyst (hereinafter referred to as "an SCR catalyst 12") is provided in an exhaust passage 11 of an engine 10. The exhaust passage 11 includes a branch passage 11 a that branches off therefrom upstream of this SCR catalyst 12 with respect to the flow of exhaust gas. An addition valve 30 that injects a reducing agent is fitted to an end of the branch passage 11a. An aqueous solution of urea is used as the reducing agent.

The reducing agent injected to the branch passage 11a from a nozzle hole 31 of the addition valve 30 is introduced into the exhaust passage 11 through the branch passage 11 a. Then, this reducing agent is hydrolyzed into ammonia due to the heat of exhaust gas, before being added to the SCR catalyst 12. As a result, in the SCR catalyst 12, NOx in exhaust gas are purified into nitrogen through a reduction reaction with ammonia.

Besides, a first NOx sensor 41 is provided in the exhaust passage 11 upstream of the SCR catalyst 12 with respect to the flow of exhaust gas, and a second NOx sensor 42 is provided in the exhaust passage 11 downstream of the SCR catalyst 12 with respect to the flow of exhaust gas. The first NOx sensor 41 detects a concentration Nin of NOx in exhaust gas flowing into the SCR catalyst 12. The second NOx sensor 42 detects a concentration Nout of NOx in exhaust gas discharged from the SCR catalyst 12. The NOx concentrations Nin and Nout detected by these NOx sensors 41 and 42 respectively are fetched by a control unit 50. Then, the control unit 50 calculates an NOx purification rate of the SCR catalyst 12 on the basis of a formula (1) shown below.

$$\text{NOx purification rate} \leftarrow (\text{Nin}-\text{Nout})\cdot 100/\text{Nin} \ (\%) \ ... \ (1)$$

The control unit 50 drives the addition valve 30 in an opening/closing manner, thereby injecting the reducing agent from the nozzle hole 31 of the addition valve 30. An addition amount of the reducing agent in this case is set on the basis of an engine operation state such as a flow rate of exhaust gas, an engine rotational speed or the like. The control unit 50 is equipped with a memory 50a. Programs and calculation maps for performing a process of driving the addition valve 30 in an opening/closing manner and other processes are stored in the memory 50a. The control unit 50 is connected a warning lamp 60 for notifying that the abnormality in the function of purification of the exhaust emission control apparatus has occurred.

Meanwhile, part of the reducing agent injected from an addition valve 30 degenerates into biuret, cyanuric acid and the like due to the influence of the heat of exhaust gas or the like, and may be accumulated on inner surfaces of a branch passage 11 a and an exhaust passage 11 as deposits. For example, when these deposits are accumulated in the vicinity of a nozzle hole 31 of the addition valve 30 or the like, the amount and atomization mode of the reducing agent injected from the addition valve 30 cannot be made to match their requirements. Thus, the purification capacity of an SCR catalyst 12 falls.

However, such accumulation of deposits can be resolved by carrying out post injection to raise the temperature of exhaust gas and performing a burnout process of burning out the deposits. On the other hand, in the case where the addition capacity of the addition valve 30 has fallen or the SCR catalyst 12 is damaged, even if this process of burning out deposits is performed, an abnormality in the function of purification cannot be resolved.

In the exhaust emission control apparatus according to this embodiment of the invention, only in the event of an abnormality in the function of purification that cannot be resolved even if the process of burning out deposits is thus performed, the warning lamp 60 is lit up to notify that the abnormality in the function of purification has occurred.

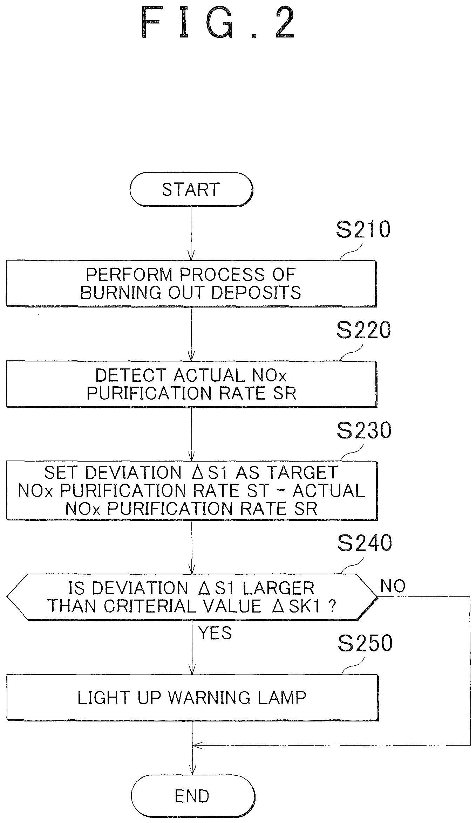

A series of process procedures in notifying that such an abnormality in the function of purification has occurred will be described hereinafter. As shown in FIG. 2, in this series of processes, a process of burning out deposits is first performed (step S210). Then, after the process of burning out deposits is completed, an actual value of the NOx purification rate (hereinafter referred to as "an actual NOx purification rate SR") is detected on the basis of the foregoing formula (1) (step S220). Subsequently, a deviation ∆S1 between a target value of the NOx purification rate (hereinafter referred to as "a target NOx purification rate ST") and the actual NOx purification rate SR (= [the target NOx purification rate ST] - [the actual NOx purification rate SR]) is calculated (step S230).

The deviation ∆S1 is a parameter serving as an index of the NOx purification capacity of the SCR catalyst 12. Besides, the target NOx purification rate ST is set on the basis of an engine operation state such as an engine rotational speed, an engine load or the like. It is then determined whether or not the deviation ∆S1 is larger than a criterial value ∆SK1 (step S240). This criterial value ∆SK1 is a value for determining, on the basis of a NOx purification rate, whether or not the NOx purification capacity of the SCR catalyst 12 is lower than a target capacity.

It should be noted herein that when the deviation ∆S1 is equal to or smaller than the criterial value ∆SK1, it is determined that the NOx purification capacity of the SCR catalyst 12 coincides with the target capacity, or that a possible difference between the NOx purification capacity of the SCR catalyst 12 and the target capacity is within a negligible range (step S240: NO). Then in this case, this series of processes are temporarily ended. On the other hand, when the deviation ∆S1 is larger than the criterial value ∆SK1, namely, when the NOx purification capacity of the SCR catalyst 12 has not reached the target capacity (step S240: YES), the warning lamp 60 is lit up (step S250). After the warning lamp 60 is thus lit up, this series of processes are ended.

Next, the operation of the exhaust emission control apparatus according to this embodiment of the invention will be described. When the NOx purification capacity of the SCR catalyst 12 has fallen as a result of a case where deposits are accumulated, the process of burning out deposits is performed to burn out the accumulated deposits. Thus, the NOx purification capacity of the SCR catalyst 12 rises, and the aforementioned deviation ∆S1 as an index of the NOx purification capacity decreases to be equal to or smaller than the criterial value ∆SK1. On the other hand, in the case where the addition capacity of the addition valve 30 has fallen or the SCR catalyst 12 is damaged, even if the process of burning out deposits is performed, the NOx purification capacity of the SCR catalyst 12 does not rise or rises only extremely slightly. Therefore, the deviation ∆S1 becomes larger than the criterial value ∆SK1.

In this embodiment of the invention, the warning lamp 60 is lit up only if the deviation ∆S1 is larger than the criterial value ∆SK1 as described above. Therefore, only in the case where an abnormality that cannot be resolved through the process of burning out deposits has occurred, the warning lamp 60 is lit up. The abnormality that cannot be resolved through the process of burning out deposits refers to a case where the addition capacity of the addition valve 30 has fallen, a case where the SCR catalyst 12 is damaged, or the like.

Besides, in this embodiment of the invention, it is determined, on the basis of a comparison between the criterial value ΔSK1 and the deviation ΔS1 between the actual NOx purification rate SR and the target NOx purification rate ST, whether or not the warning lamp 60 should be lit up. Thus, even in the case where the purification capacity of the SCR catalyst 12 is normal, when the actual NOx purification rate SR is low as in, for example, an engine operation state in which the discharge amount of NOx is extremely large, the target NOx purification rate ST is set low correspondingly. Accordingly, the deviation ΔS1 as an index of the NOx purification capacity of the SCR catalyst 12 is set in accordance with the engine operation state.

As described above, the exhaust emission control apparatus according to this embodiment of the invention can achieve the following effects. (1) Only in the case where an abnormality that cannot be resolved through the process of burning out deposits has occurred, for example, only if the addition capacity of the addition valve 30 has fallen or the SCR catalyst 12 is damaged, the warning lamp 60 can be lit up to notify that the purification function of the exhaust emission control apparatus is abnormal.

(2) Even in an engine operation state in which the discharge amount of NOx is extremely large, the deviation ΔS1 as an index of the NOx purification capacity of the SCR catalyst 12 is set in accordance with the engine operation state. Thus, the occurrence of an abnormality that cannot be resolved through the process of burning out deposits can be appropriately distinguished from the occurrence of other abnormalities to light up the warning lamp 60 and more properly notify that the function of purification is abnormal.

Next, a series of process procedures in notifying that the function of purification is abnormal in the second embodiment of the invention will be described.

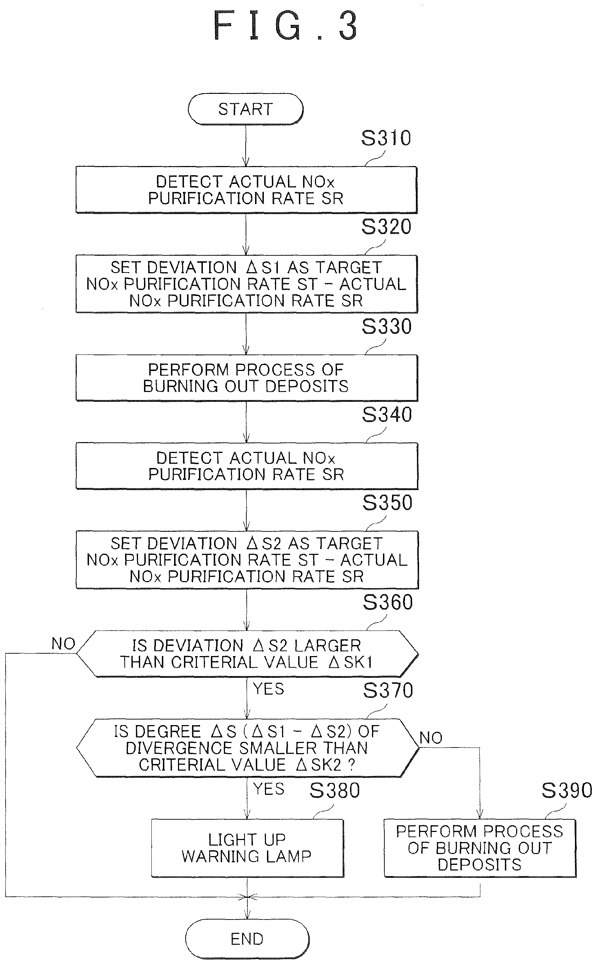

As shown in FIG. 3, in this series of processes, the actual NOx purification rate SR is first detected on the basis of the foregoing formula (1) (step S310). Then, the deviation ΔS1 between the target NOx purification rate ST and the actual NOx purification rate SR (= [the target NOx purification rate ST] - [the actual NOx purification rate SR]) is calculated (step S320). Subsequently, the process of burning out deposits is performed (step S330). That is, in each of the processes of the foregoing steps S310 and S320, the deviation ΔS1 as an index of the NOx purification capacity of the SCR catalyst 12 is obtained prior to the start of the process of burning out deposits.

Then, after the process of burning out deposits is performed, the actual NOx purification rate SR is detected again (step S340), and also a deviation ΔS2 (= [the target NOx purification rate ST] - [the actual NOx purification rate SR]) is calculated (step S350). It is then determined whether or not this deviation ΔS2 is larger than the criterial value ΔSK1 (step S360). As is the case with the first embodiment of the invention, this criterial value ΔSK1 is a value for determining, on the basis of the NOx purification rate, whether or not the NOx purification capacity of the SCR catalyst 12 is lower than a target capacity.

It should be noted herein that when the deviation ΔS2 is equal to or smaller than the criterial value ΔSK1, it can be determined that the NOx purification capacity of the SCR catalyst 12 coincides with the target capacity, or that a possible difference between the NOx purification capacity of the SCR catalyst 12 and the target capacity is within a negligible range (step S360: NO). Then in this case, this series of processes are temporarily ended.

On the other hand, when the deviation ΔS2 is larger than the criterial value ΔSK1, namely, when the NOx purification capacity of the SCR catalyst 12 has not reached the target capacity (step S360: YES), it is determined whether or not a degree ΔS of divergence between the respective deviations ΔS1 and ΔS2 obtained previously (= ΔS1-ΔS2) is smaller than a criterial value ΔSK2 (step S370). It should be noted herein that the criterial value ΔSK2 is a value for determining whether or not the NOx purification capacity of the SCR catalyst 12 has sufficiently risen along with the burnout of deposits through the performance of the process of burning out deposits.

Then, when the degree ΔS of divergence is smaller than this criterial value ΔSK2 (step S370: YES), the warning lamp 60 is lit up (step S380). After the warning lamp 60 is thus lit up, this series of processes are ended. On the other hand, when the degree ΔS of divergence is equal to or larger than this criterial value ΔSK2 (step S370: NO), the process of burning out deposits is performed again (step S390). After the process of burning out deposits is thus performed, this series of processes are temporarily ended.

Next, the operation of the exhaust emission control apparatus according to this embodiment of the invention will be described. The amount of deposits that can be burned out by performing the process of burning out deposits once is limited. Thus, under a situation where deposits are accumulated in an amount that exceeds the burnout capacity of the burnout process, even if the burnout process is performed, the NOx purification capacity of the SCR catalyst 12 does not rise to the predetermined capacity. In this case, the deviation ΔS2 between the target NOx purification rate ST and the actual NOx purification rate SR may not become equal to or smaller than the criterial value ΔSK1.

However, even in such a case, when the NOx purification capacity has fallen as a result of the accumulation of deposits, the NOx purification capacity of the SCR catalyst 12 rises through the performance of the process of burning out deposits. Accordingly, in this case, the degree ΔS of divergence between the deviation ΔS1 that is obtained prior to the start of the burnout process and the deviation ΔS1 that is obtained upon the completion of the burnout process is large.

On the other hand, in the case where the addition capacity of the addition valve 30 has fallen or the SCR catalyst 12 is damaged, even if the process of burning out deposits is performed, the NOx purification capacity of the SCR catalyst 12 does not rise or rises only extremely slightly. Accordingly, in this case, the degree ΔS of divergence between the deviation ΔS1 that is obtained prior to the start of the burnout process and the deviation ΔS2 that is obtained upon the completion of the burnout process is small.

Accordingly, when the deviation ΔS2 between the target NOx purification rate ST and the actual NOx purification rate SR is not equal to or smaller than the criterial value ΔSK1, the degree ΔS2 of divergence and the criterial value ΔSK2 are compared with each other. This makes it possible to identify the reason why the deviation ΔS2 is not equal to or smaller than the criterial value ΔSK1 among the accumulation of deposits in an amount that exceeds the burnout capacity of the burnout process, a fall in the addition capacity of the addition valve 30, or any other factor.. Accordingly, appropriate processes corresponding to those factors, namely, the process of lighting up the warning lamp 60 and the process of burning out deposits can be performed.

As described above, the exhaust emission control apparatus according to this embodiment of the invention can achieve the following effects in addition to the effects (1) and (2) described in the first embodiment of the invention. (3) A case where deposits cannot be sufficiently burned out by performing the process of burning out deposits once and a case where an abnormality that cannot be resolved through the process of burning out deposits can be properly distinguished from each other, and the occurrence of the abnormality can be notified only in the latter case.

(4) Besides, when the burnout of a sufficient amount of deposits through the burnout process has been impossible due to the accumulation of deposits in an amount that exceeds the burnout capacity of the process of burning out deposits, the deposits that are still accumulated even after the completion of the last burnout process can be burned out. Thus, the NOx purification capacity of the SCR catalyst 12 can be swiftly raised.

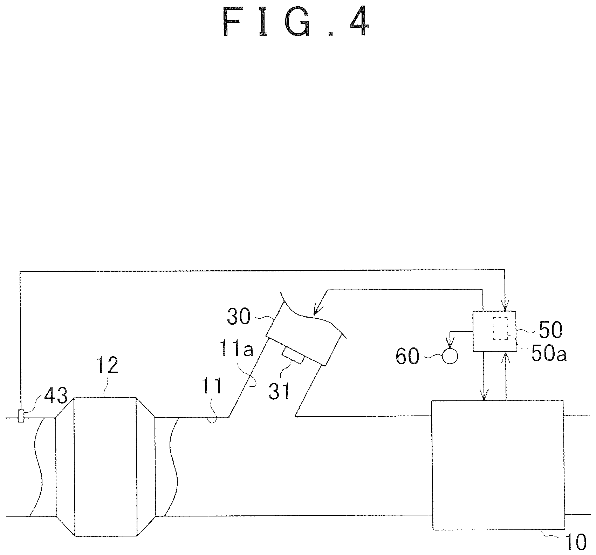

Next, the third embodiment of the invention will be described. In the first embodiment of the invention, the NOx sensors are provided in the exhaust passage 11 both upstream and downstream of the SCR catalyst 12 respectively with respect to the flow of exhaust gas. However, in this embodiment of the invention, as shown in FIG. 4, a NOx sensor 43 is provided only downstream of the SCR catalyst 12 with respect to the flow of exhaust gas. The NOx sensor 43 is used to detect a concentration of NOx in exhaust gas discharged from the SCR catalyst 12. Then, the NOx purification capacity of the SCR catalyst 12 is obtained on the basis of a deviation ΔN1 between a NOx concentration that is detected by this NOx sensor 43 (hereinafter referred to as "an actual NOx concentration NR") and a target value of the NOx concentration that is set on the basis of an engine operation state (hereinafter referred to as "a target NOx concentration NT").

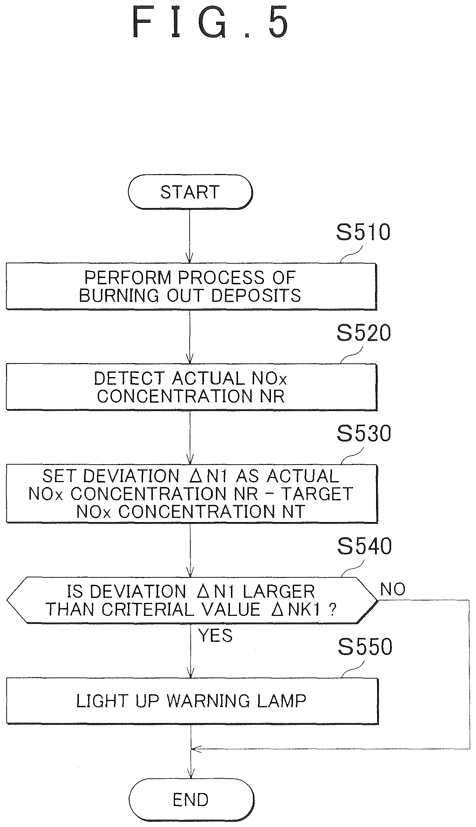

Next, a series of processes of notifying an abnormality in the purification function of the exhaust emission control apparatus will be described. As shown in FIG. 5, in this series of processes, the process of burning out deposits is first performed (step S510). Then, after the process of burning out deposits is completed, the actual NOx concentration NR is detected (step S520). Subsequently, the deviation ΔN1 between the target NOx concentration NT and the actual NOx concentration NR (= [the actual NOx concentration NR] - [the target NOx concentration NT]) is calculated (step S530).

It should be noted herein that this deviation ΔN1 is a parameter serving as an index of the NOx purification capacity of the SCR catalyst 12. Besides, the target NOx concentration NT is set on the basis of an engine operation state such as an engine rotational speed, an engine load or the like. It is then determined whether or not this deviation ΔN1 is larger than the criterial value ΔNK1 (step S540). This criterial value ΔNK1 is a value for determining, on the basis of the NOx concentration, whether or not the NOx purification capacity of the SCR catalyst 12 is lower than a target capacity.

It should be noted herein that when the deviation ΔN1 is equal to or smaller than the criterial value ΔNK1, it is determined that the NOx purification capacity of the SCR catalyst 12 coincides with the target capacity, or that a possible difference between the NOx purification capacity of the SCR catalyst 12 and the target capacity is within a negligible range (step S540: NO). Then in this case, this series of processes are temporarily ended. On the other hand, when the deviation ΔN1 is larger than the criterial value ΔNK1, namely, when the NOx purification capacity of the SCR catalyst 12 has not reached the target capacity (step S540: YES), the warning lamp 60 is lit up (step S550). After the warning lamp 60 is thus lit up, this series of processes are ended.

As described hitherto, this embodiment of the invention is different from the first embodiment of the invention in that the concentration of NOx in exhaust gas discharged from the SCR catalyst 12 is used as an index for making a determination on the NOx purification capacity of the SCR catalyst 12. However, this embodiment of the invention is identical to the first embodiment of the invention in the basic process procedure in notifying the occurrence of an abnormality. Thus, this embodiment of the invention can achieve an operation and effect close to those of the first embodiment of the invention.

Next, the fourth embodiment of the invention will be described. In this embodiment of the invention as well as the third embodiment of the invention, the NOx sensor 43 is provided only downstream of the SCR catalyst 12 with respect to the flow of exhaust gas, so as to detect a concentration of NOx in exhaust gas discharged from the SCR catalyst 12. Then, a determination on the NOx purification capacity of the SCR catalyst 12 is made on the basis of the deviation ΔN1 between the actual NOx concentration NR that is detected by this NOx sensor 43 and the target NOx concentration NT that is set on the basis of the engine operation state.

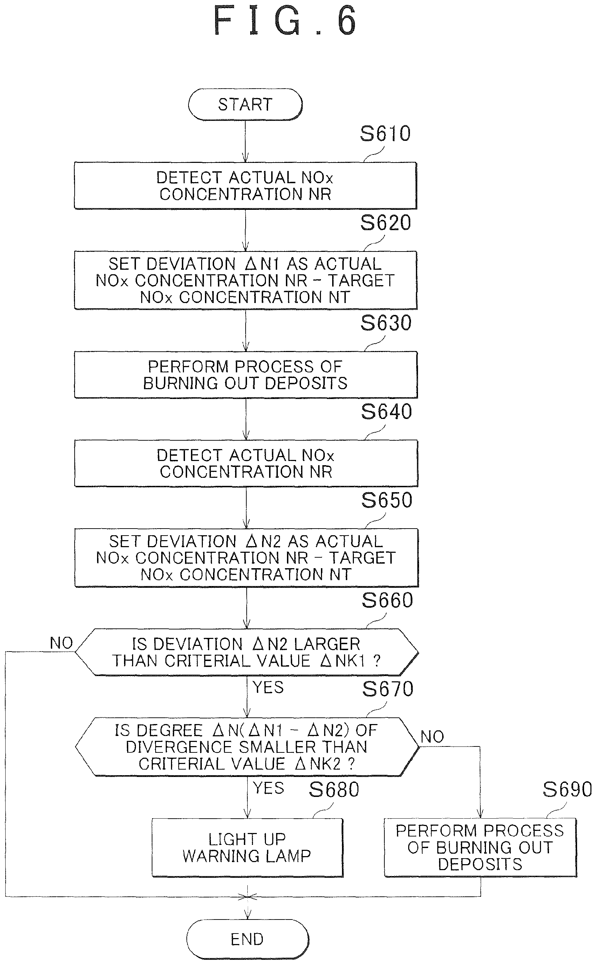

Next, a series of processes in notifying the occurrence of an abnormality in the purification function of the exhaust emission control apparatus will be described. As shown in FIG. 6, in this series of processes, the actual NOx concentration NR is first detected (step S610). Then, the deviation ΔN1 between the target NOx concentration NT and the actual NOx concentration NR (= [the actual NOx concentration NR] - [the target NOx concentration NT]) is calculated (step S620). Subsequently, the process of burning out deposits is performed (step S630). That is, in each of the processes of the foregoing steps S610 and S620, the deviation ΔN1 serving as an index of the NOx purification capacity of the SCR catalyst 12 is obtained prior to the start of the process of burning out deposits.

Then, after the process of burning out deposits is performed, the actual NOx concentration NR is detected again (step S640), and also, the deviation ΔN2 (= [the actual NOx concentration NR] - [the target NOx concentration NT]) is calculated (step S650). Subsequently, it is determined whether or not this deviation ΔN2 is larger than the criterial value ΔNK1 (step S660). This criterial value ΔNK1 is a value for determining, on the basis of the NOx concentration, whether or not the NOx purification capacity of the SCR catalyst 12 is lower than the target capacity.

It should be noted herein that when the deviation ΔN2 is equal to or smaller than the criterial value ΔNK1, it is determined that the NOx purification capacity of the SCR catalyst 12 coincides with the target capacity, or that a possible difference between the NOx purification capacity of the SCR catalyst 12 and the target capacity is within a negligible range (step S660: NO). Then in this case, this series of processes are temporarily ended.

On the other hand, when the deviation ΔN2 is larger than the criterial value ΔNK1, namely, when the NOx purification capacity of the SCR catalyst 12 has not reached the target capacity (step S660: YES), it is determined whether or not the degree ΔN of divergence between the previously obtained deviations ΔN1 and ΔN2 (= ΔN1-ΔN2) is smaller than a criterial value ΔNK2 (step S670). It should be noted herein that the criterial value ΔNK2 is a value for determining whether or not the NOx purification capacity of the SCR catalyst 12 has sufficiently risen along with the burnout of deposits through the performance of the process of burning out deposits.

Then, if the degree ΔN of divergence is smaller than this criterial value ΔNK2 (step S670: YES), the warning lamp 60 is lit up (step S680). After the warning lamp 60 is thus lit up, this series of processes are ended. On the other hand, if the degree ΔN of divergence is equal to or larger than this criterial value ΔNK2 (step S670: NO), the process of burning out deposits is performed again (step S690). After the process of burning out deposits is thus performed, this series of processes are temporarily ended.

As described hitherto, this embodiment of the invention is different from the second embodiment of the invention in that the concentration of NOx in exhaust gas discharged from the SCR catalyst 12 is used as an index of the NOx purification capacity of the SCR catalyst 12. However, this embodiment of the invention is identical to the second embodiment of the invention in the basic process procedure in notifying the occurrence of an abnormality. Accordingly, this embodiment of the invention can achieve an operation end effect close to those of the second embodiment of the invention.

Although the respective embodiments of the invention have been described above, these embodiments of the invention can also be implemented as modification examples that are altered as will be described below. In each of the first embodiment of the invention and the second embodiment of the invention, the concentration of NOx in exhaust gas flowing into the SCR catalyst 12 is detected by a first NOx sensor 41. However, it is also possible to estimate this NOx concentration on the basis of an engine operation state, and calculate a NOx purification rate on the basis of the estimated NOx concentration and a NOx concentration that is detected by a second NOx sensor 42.

In each of the second embodiment of the invention and the fourth embodiment of the invention, when the NOx purification capacity of the SCR catalyst 12 has not reached the predetermined capacity and the degree of divergence between the respective NOx purification capacities that are detected before and after the burnout process respectively is equal to or larger than the predetermined value, the process of burning out deposits is performed again. However, the performance of this burnout process can also be omitted. In this case as well, only if an abnormality that cannot be resolved through the process of burning out deposits has occurred, for example, if the addition capacity of the addition valve 30 has fallen or the SCR catalyst 12 is damaged, the warning lamp 60 can be lit up.

In each of the second embodiment of the invention and the fourth embodiment of the invention, the deviation ΔS1 in the NOx purification rate or the deviation ΔN1 in the NOx concentration is obtained before the performance of the process of burning out deposits. However, when these deviations gently change in initial stages of the start of the burnout process, they may be obtained simultaneously with or immediately after the start of the burnout process.

In each of the foregoing embodiments of the invention, the NOx purification capacity of the SCR catalyst 12 may also be obtained on the basis of, for example, the ratio of the actual NOx purification rate SR to the target NOx purification rate ST (= SR/ST) or the ratio of the actual NOx concentration NR to the target NOx concentration NT (= NR/NT).

Besides, the NOx purification capacity can also be obtained on the basis of the amount of NOx discharged from the SCR catalyst 12 as well as the NOx purification rate or the NOx concentration as described above. In this case, the NOx purification capacity can be obtained on the basis of, for example, the deviation between the actual NOx discharge amount QR, which is calculated from the NOx concentration and the flow rate of exhaust gas, and the target amount QT (= QR-QT) or the ratio therebetween (QT/QR). Then, it is appropriate to compare each of these parameters serving as an index of the NOx purification capacity with a predetermined value that is set in a manner corresponding to the parameter, and determine that the NOx purification capacity after the completion of the burnout process has not reached the predetermined value, on the basis of a state where the parameter has not reached the predetermined value.

In each of the embodiments of the invention or each of the foregoing modification examples, there is presented an example in which it is determined, from the parameter that is calculated using the NOx purification rate, the NOx concentration or the NOx discharge amount and the target value thereof, that the NOx purification capacity after the completion of the burnout process has not reached the predetermined capacity. On the other hand, even if the target value is not used in this manner, a determination on the NOx purification capacity after the completion of the burnout process can be made only on the basis of the parameter such as the NOx purification rate, the NOx concentration or the NOx discharge amount. That is, it is also possible to obtain in advance a transition range of the parameter by performing the process of burning out deposits, and determine, on the basis of a state where the parameter has not reached the range, that the NOx purification capacity has not reached the predetermined capacity. For example, in the case where the burnout process is performed, when the NOx purification rate constantly rises to become equal to or higher than $\alpha$%, it is possible to determine that the NOx purification capacity has not reached the predetermined capacity when the NOx purification rate that is detected after the completion of the burnout process has not reached $\alpha$% as mentioned herein.

In each of the foregoing embodiments of the invention, there is presented an example in which the difference in the NOx purification rate (the degree $\Delta S$ of divergence) or the difference in the NOx concentration (the degree $\Delta N$ of divergence) is used as the degree of divergence between the NOx purification capacity that is detected prior to the start of the burnout process and the NOx purification capacity that is detected upon the completion of the burnout process. Moreover, this degree of divergence may also be obtained from various parameters representing the NOx purification capacity exemplified in each of the foregoing modification examples.

In each of the foregoing embodiments of the invention or each of the modification examples thereof, a filter that captures particulate matters in exhaust gas may be provided in the exhaust passage 11 upstream of a region to which the branch passage 11a is connected, with respect to the flow of exhaust gas. In this configuration, the amount of particulate matters captured by the filter is monitored. When the monitored amount becomes larger than a predetermined amount, post injection or the like is carried out to raise the temperature of exhaust gas, whereby a filter regeneration process of restoring the function of the filter by burning out the particulate matters captured by the filter is performed. Thus, the process of burning out deposits may serve as the filter regeneration process as well, and the deposits may be burned out through the filter regeneration process.

As the process in notifying that the function of purification is abnormal, there is presented an example in which the warning lamp is lit up. However, for example, the occurrence of an abnormality may be notified through a warning sound, or abnormality information may be displayed on a display screen of a vehicle-mounted navigation system or the like.

Although the example in which the aqueous solution of urea is used as the reducing agent has been presented, it is also possible to use, for example, other ammonic reducing agents such as ammonia compounds and the like. Although the diesel engine has been exemplified as the internal combustion engine to which the exhaust emission control apparatus according to the invention is applied, this internal combustion engine is not required to be a diesel engine, but may be, for example, a gasoline engine that is often operated in such a manner as to make the air-fuel ratio lean.

While the disclosure has been explained in conjunction with the specific exemplary embodiments thereof, it is evident that many alternatives, modifications, and variations will be apparent to those skilled in the art. Accordingly, the exemplary embodiments of the disclosure as set forth herein are intended to be illustrative, not limiting. There are changes that may be made without departing from the scope of the appended claims.

**Claims**

1. An exhaust emission control apparatus, for an internal combustion engine (10), comprising a urea selective reduction catalyst (12) that is provided in an exhaust passage (11) of the internal combustion engine (10) and an addition valve (30) that adds a reducing agent to the selective reduction catalyst (12), wherein
the exhaust emission control apparatus is adapted to detect a NOx purification capacity of the selective reduction catalyst (12) when a burnout process of burning out deposits is completed, and
is adapted to notify that a function of purification is abnormal when the detected NOx purification capacity has not reached a predetermined capacity and a degree of divergence between a NOx purification capacity of the selective reduction catalyst (12) prior to burnout of deposits through the burnout process and the NOx purification capacity detected when the burnout process is completed is smaller than a predetermined value.

2. The exhaust emission control apparatus for the internal combustion engine (10) according to claim 1, adapted to notify that the function of purification is abnormal when the detected NOx purification capacity is divergent from a target value.

3. The exhaust emission control apparatus for the internal combustion engine (10) according to claim 2, adapted to perform again the process of burning out deposits when the detected NOx purification capacity has not reached the predetermined capacity and the degree of divergence is equal to or larger than the predetermined value.

4. A control method for an exhaust emission control apparatus having a urea selective reduction catalyst (12) provided in an exhaust passage (11) of an internal combustion engine and an addition valve (30) that adds a reducing agent to the selective reduction catalyst (12), comprising the steps of:

adding a reducing agent to the urea selective reduction catalyst, which is provided in the exhaust passage (11) of the internal combustion engine (10), from the addition valve (30);
detecting a NOx purification capacity of the selective reduction catalyst when a burnout process of burning out deposits is completed; and
notifying that a function of purification is abnormal when the detected NOx purification capacity has not reached a predetermined capacity and a degree of divergence between a NOx purification capacity of the selective reduction catalyst (12) prior to burnout of deposits through the burnout process and the NOx purification capacity detected when the burnout process is completed is smaller than a predetermined value.

**Patentansprüche**

1. Abgasemissionssteuervorrichtung für eine Brennkraftmaschine (10), die einen selektiven Reduktionskatalysator (12) auf Harnstoffbasis umfasst, der in einem Abgasdurchlass (11) der Brennkraftmaschine (10) vorgesehen ist, und ein Zugabeventil (30), das dem selektiven Reduktionskatalysator (12) ein Reduktionsagens zugibt, wobei

die Abgasemissionssteuervorrichtung dazu angepasst ist, eine NOx-Reinigungskapazität des selektiven Reduktionskatalysators (12) zu erfassen wenn ein Abbrennvorgang des Ausbrennens von Abscheidungen abgeschlossen ist, und
dazu angepasst ist, zu benachrichtigen, dass eine Reinigungsfunktion abnorm ist, wenn die erfasste NOx-Reinigungskapazität eine vorab festgelegte Kapazität nicht erreicht hat und ein Grad des Unterschieds zwischen einer NOx-Reinigungskapazität des selektiven Reduktionskatalysators (12) vor dem Ausbrennen der Abscheidungen durch den Ausbrennvorgang und der NOx-Reinigungskapazität, die erfasst wird, wenn der Ausbrennvorgang abgeschlossen ist, kleiner als ein vorab festgelegter Wert ist.

2. Abgasemissionssteuervorrichtung für die Brennkraftmaschine (10) nach Anspruch 1, die dazu angepasst ist, zu bemerken, dass die Reinigungsfunktion abnorm ist, wenn die erfasste NOx-Reinigungskapazität von einem Sollwert abweicht.

3. Abgasemissionssteuervorrichtung für die Brennkraftmaschine (10) nach Anspruch 2, die dazu angepasst ist, den Vorgang des Ausbrennens der Abscheidungen erneut durchzuführen, wenn die erfasste NOx-Reinigungskapazität die vorab festgelegte Kapazität nicht erreicht hat und der Grad des Unterschieds gleich groß wie oder größer als der vorab festgelegte Wert ist.

4. Steuerverfahren für eine Abgasemissionssteuervorrichtung mit einem selektiven Reduktionskatalysator (12) auf Harnstoffbasis, der in einem Abgasdurchlass (11) einer Brennkraftmaschine vorgesehen ist, und einem Zugabeventil (30), das dem selektiven Reduktionskatalysator (12) ein Reduktionsagens zugibt, mit den Schritten:

Zugeben eines Reduktionsagens zum selektiven Reduktionskatalysator (12) auf Harnstoffbasis, der im Abgasdurchlass (11) der Brennkraftmaschine (10) vorgesehen ist, aus dem Zugabeventil (30);
Erfassen einer NOx-Reinigungskapazität des selektiven Reduktionskatalysators, wenn ein Ausbrennvorgang des Ausbrennens von Abscheidungen abgeschlossen ist; und
Benachrichtigen, dass eine Reinigungsfunktion abnorm ist, wenn die erfasste NOx-Reinigungskapazität eine vorab festgelegte Kapazität nicht erreicht hat und ein Grad des Unterschieds zwischen einer NOx-Reinigungskapazität des selektiven Reduktionskatalysators (12) vordem Ausbrennen der Abscheidungen durch den Ausbrennvorgang und der NOx-Reinigungskapazität, die erfasst wird, wenn der Ausbrennvorgang abgeschlossen ist, kleiner ist als ein vorab festgelegter Wert.

**Revendications**

1. Appareil de contrôle d'émission d'échappement, pour un moteur à combustion interne (10), comprenant un catalyseur de réduction sélective d'urée (12) qui est fourni dans un passage d'échappement (11) du moteur à combustion interne (10) et une vanne d'addition (30) qui ajoute un agent réducteur au catalyseur de réduction sélective (12), dans lequel

   l'appareil de contrôle d'émission d'échappement est adapté pour détecter une capacité de purification de NOx du catalyseur de réduction sélective (12) lorsqu'un procédé de calcination calcinant des dépôts est achevé, et

   est adapté pour notifier qu'une fonction de purification est anormale lorsque la capacité de purification de NOx détectée n'a pas atteint une capacité prédéterminée et un degré de divergence entre une capacité de purification de NOx du catalyseur de réduction sélective (12) avant la calcination de dépôts par le procédé de calcination et la capacité de purification de NOx détectée lorsque le procédé de calcination est achevé est inférieur à une valeur prédéterminée.

2. Appareil de contrôle d'émission d'échappement pour le moteur à combustion interne (10) selon la revendication 1, adapté pour notifier que la fonction de purification est anormale lorsque la capacité de purification de NOx détectée est divergente d'une valeur cible.

3. Appareil de contrôle d'émission d'échappement pour le moteur à combustion interne (10) selon la revendication 2, adapté pour réaliser à nouveau le procédé de calcination de dépôts lorsque la capacité de purification de NOx détectée n'a pas atteint la capacité prédéterminée et le degré de divergence est supérieur ou égal à la vapeur prédéterminée.

4. Procédé de contrôle pour un appareil de contrôle d'émission d'échappement ayant un catalyseur de réduction sélective d'urée (12) fourni dans un passage d'échappement (11) d'un moteur à combustion interne et une vanne d'addition (30) qui ajoute un agent réducteur au catalyseur de réduction sélective (12), comprenant les étapes de :

   addition d'un agent réducteur au catalyseur de réduction sélective d'urée, lequel est fourni dans le passage d'échappement (11) du moteur à combustion interne (10), à partir de la vanne d'addition (30) ;

   détection d'une capacité de purification de NOx du catalyseur de réduction sélective lorsqu'un procédé de calcination calcinant des dépôts est achevé ; et

   notification qu'une fonction de purification est anormale lorsque la capacité de purification de NOx détectée n'a pas atteint une capacité prédéterminée et un degré de divergence entre une capacité de purification de NOx du catalyseur de réduction sélective (12) avant la calcination de dépôts par le procédé de calcination et la capacité de purification de NOx détectée lorsque le procédé de calcination est achevé est inférieur à une valeur prédéterminée.

# FIG.1

# FIG.2

```
           ┌─────────────┐
           │    START    │
           └──────┬──────┘
                  │                          S210
         ┌────────▼──────────────┐
         │   PERFORM PROCESS OF   │
         │   BURNING OUT DEPOSITS │
         └────────┬──────────────┘
                  │                          S220
         ┌────────▼──────────────┐
         │   DETECT ACTUAL NOx    │
         │   PURIFICATION RATE SR │
         └────────┬──────────────┘
                  │                          S230
         ┌────────▼───────────────────┐
         │  SET DEVIATION ΔS1 AS TARGET │
         │ NOx PURIFICATION RATE ST - ACTUAL │
         │   NOx PURIFICATION RATE SR  │
         └────────┬───────────────────┘
                  │                          S240
            ┌─────▼─────────────────┐   NO
           <  IS DEVIATION ΔS1 LARGER  >────┐
            │ THAN CRITERIAL VALUE ΔSK1 ? │  │
            └─────┬─────────────────┘      │
                  │ YES           S250      │
         ┌────────▼──────────────┐          │
         │  LIGHT UP WARNING LAMP │          │
         └────────┬──────────────┘          │
                  │◄─────────────────────────┘
           ┌──────▼──────┐
           │     END     │
           └─────────────┘
```

# FIG.3

START

S310

DETECT ACTUAL NOx
PURIFICATION RATE SR

S320

SET DEVIATION $\Delta$S1 AS TARGET
NOx PURIFICATION RATE ST $-$ ACTUAL
NOx PURIFICATION RATE SR

S330

PERFORM PROCESS OF
BURNING OUT DEPOSITS

S340

DETECT ACTUAL NOx
PURIFICATION RATE SR

S350

SET DEVIATION $\Delta$S2 AS TARGET
NOx PURIFICATION RATE ST $-$ ACTUAL
NOx PURIFICATION RATE SR

S360

IS DEVIATION $\Delta$S2 LARGER
THAN CRITERIAL VALUE $\Delta$SK1 — NO

YES          S370

IS DEGREE $\Delta$S ($\Delta$S1 $-$ $\Delta$S2) OF
DIVERGENCE SMALLER THAN
CRITERIAL VALUE $\Delta$SK2 ? — NO

YES    S380                                S390

LIGHT UP
WARNING LAMP

PERFORM PROCESS
OF BURNING OUT
DEPOSITS

END

# FIG.4

# F I G . 5

```
            ( START )
                |
                |                        S510
                v
   +--------------------------+
   |    PERFORM PROCESS OF     |
   |    BURNING OUT DEPOSITS   |
   +--------------------------+
                |
                |                        S520
                v
   +--------------------------+
   |    DETECT ACTUAL NOx      |
   |    CONCENTRATION NR       |
   +--------------------------+
                |
                |                        S530
                v
   +--------------------------+
   |  SET DEVIATION ΔN1 AS     |
   |  ACTUAL NOx CONCENTRATION |
   |  NR – TARGET NOx          |
   |  CONCENTRATION NT         |
   +--------------------------+
                |
                |                        S540
                v
   < IS DEVIATION ΔN1 LARGER >  NO
   < THAN CRITERIAL VALUE    >----+
   < ΔNK1 ?                  >    |
                | YES             |
                |          S550   |
                v                 |
   +--------------------------+   |
   |  LIGHT UP WARNING LAMP    |   |
   +--------------------------+   |
                |                 |
                |<----------------+
                v
            ( END )
```

# F I G . 6

```
                    ┌─────────────┐
                    │    START    │
                    └─────────────┘
                           │                    S610
                           ▼
          ┌────────────────────────────────────┐
          │       DETECT ACTUAL NOx            │
          │        CONCENTRATION NR            │
          └────────────────────────────────────┘
                           │                    S620
                           ▼
          ┌────────────────────────────────────┐
          │    SET DEVIATION ΔN1 AS ACTUAL     │
          │  NOx CONCENTRATION NR - TARGET     │
          │       NOx CONCENTRATION NT         │
          └────────────────────────────────────┘
                           │                    S630
                           ▼
          ┌────────────────────────────────────┐
          │        PERFORM PROCESS OF          │
          │       BURNING OUT DEPOSITS         │
          └────────────────────────────────────┘
                           │                    S640
                           ▼
          ┌────────────────────────────────────┐
          │       DETECT ACTUAL NOx           │
          │        CONCENTRATION NR            │
          └────────────────────────────────────┘
                           │                    S650
                           ▼
          ┌────────────────────────────────────┐
          │    SET DEVIATION ΔN2 AS ACTUAL     │
          │  NOx CONCENTRATION NR - TARGET     │
          │       NOx CONCENTRATION NT         │
          └────────────────────────────────────┘
                           │                    S660
                           ▼
      NO  ╱───────────────────────────────────╲
   ◄──────   IS DEVIATION ΔN2 LARGER
          ╲  THAN CRITERIAL VALUE ΔNK1 ?      ╱
              │ YES                 S670
              ▼
          ╱───────────────────────────────────╲  NO
             IS DEGREE ΔN(ΔN1 - ΔN2) OF          ──►
             DIVERGENCE SMALLER THAN
          ╲  CRITERIAL VALUE ΔNK2 ?            ╱
              │ YES        S680              S690
              ▼
     ┌──────────────────┐      ┌──────────────────┐
     │    LIGHT UP       │      │ PERFORM PROCESS  │
     │  WARNING LAMP     │      │  OF BURNING OUT  │
     │                   │      │    DEPOSITS      │
     └──────────────────┘      └──────────────────┘
              │
              ▼
          ┌─────────────┐
          │     END     │
          └─────────────┘
```

**EP 2 664 759 B1**

**REFERENCES CITED IN THE DESCRIPTION**

**Patent documents cited in the description**

- JP 2004176719 A
- EP 1426575 A1
- JP 2009257190 A